# EUROPÄISCHE PATENTANMELDUNG

(11) **EP 0 978 925 A2**
(43) Veröffentlichungstag der Anmeldung: **09.02.2000**
(21) Anmeldenummer: 99114279.5
(22) Anmeldetag: 29.07.1999
(51) Int. Cl.: H02J 13/00

(54) **Steuersystem zum zentralen Schalten von elektrischen Verbrauchern, insbesondere Haushaltsgeräten**

(30) Priorität: 06.08.1998 DE 19835650
(71) Anmelder: SIEMENS AKTIENGESELLSCHAFT, 80333 München (DE)
(72) Erfinder: Beckers, Paul, 52399 Merzenich (DE)

(57) **Zusammenfassung**

Die Erfindung betrifft ein Steuersystem zum zentralen Schalten von elektrischen Verbrauchern (V,V₁ - Vₙ), insbesondere Haushaltsgeräten. Um den Verkabelungs- und Montageaufwand und Begrenzungen hinsichtlich der Anzahl der anschließbaren Verbraucher (V,V₁ - Vₙ) zu reduzieren, besteht das Steuersystem aus einer zentralen Steuereinheit (1) mit einem Bedienelement (3), einem mit der Steuereinheit (1) verbundenen Energiebus (4), umfassend Energieversorgungsleitungen (L,N,PE) eines Energieversorgungsnetzes und wenigstens eine Signalleitung (S), und wenigstens einer Schalteinheit zum Anschluß eines Verbrauchers (V,V₁ - Vₙ) an den Energiebus (4), welche seitens des Verbrauchers (V,V₁ - Vₙ) angeordnet ist.

## Beschreibung

Die vorliegende Erfindung betrifft ein Steuersystem zum zentralen Schalten von elektrischen Verbrauchern, insbesondere Haushaltsgeräten.

Bei elektrischen Verbrauchern, insbesondere Haushaltsgeräten wie Waschmaschinen, Spülmaschinen, Klimageräten, Sprudelbadgeräten, elektrischen Jalousien und dergleichen, müssen verschiedene elektrische Komponenten, beispielsweise Magnetventile, Heizungen, Motoren, Pumpen und dergleichen, jeweils zum richtigen Zeitpunkt mit Energie versorgt werden. Um die Energieversorgung der verschiedenen elektrischen Komponenten mehrerer Verbraucher zum richtigen gewünschten Zeitpunkt möglichst einfach und komfortabel zu gestalten, sind zentrale Steuerungen bekannt, mit denen von einem zentralen Ort aus die Energieversorgung gesteuert werden kann. So werden beispielsweise in Tennishallen die verschiedenen Lampen der einzelnen Spielplätze nur in Abhängigkeit der Mietzeit eingeschaltet. Dabei sind die Steuerungen zur Automatisierung programmierbar, so daß ein Bedienpersonal nicht permanent anwesend sein muß. Ebenso können so im Haushalt Verbraucher bei Abwesenheit der Einwohnenden aktiviert werden und deren Anwesenheit simulieren, beispielsweise zur Abschreckung von potentiellen Einbrechern.

Bei den bisher bekannten zentralen Steuerungen sind die verschiedenen elektrischen Komponenten sternförmig mit der Steuerung verbunden, was einen großen Verkabelungs- und Montageaufwand mit sich bringt. Darüber hinaus sind Störungen innerhalb der Verkabelung in der Regel nur mit großem Aufwand beseitigbar. Ein weiterer Nachteil der bekannten Steuerungen ist in einer Begrenzung hinsichtlich der Anzahl der anschließbaren Verbraucher gegeben, da die Steuerungen mit einer fest vorgegebenen Anzahl von Schaltelementen, beispielsweise Relais, ausgestattet sind. Eine Erweiterung der Steuerungen ist nicht oder aber nur mit erheblichem Aufwand möglich.

Der Erfindung liegt in Anbetracht dieses Standes der Technik die Aufgabe zugrunde, ein Steuersystem zum zentralen Schalten von elektrischen Verbrauchern bereitzustellen, welches einen geringen Verkabelungs- und Montageaufwand und praktisch keine Begrenzungen hinsichtlich der Anzahl der anschließbaren Verbraucher mit sich bringt.

Die Aufgabe ist erfindungsgemäß gelöst durch ein Steuersystem zum zentralen Schalten von elektrischen Verbrauchern, insbesondere Haushaltsgeräten, bestehend aus einer zentralen Steuereinheit mit einem Bedienelement, einem mit der Steuereinheit verbundenen Energiebus umfassend Energieversorgungsleitungen eines Energieversorgungsnetzes und wenigstens eine Signalleitung, und wenigstens einer Schalteinheit zum Anschluß eines Verbrauchers an den Energiebus, welche seitens des Verbrauchers angeordnet ist.

Durch die Verwendung eines Energiebusses, bestehend aus Energieversorgungsleitungen und wenigstens einer Signalleitung, ist der Verkabelungs- und Montageaufwand erheblich reduziert, da bei einem Bussystem sämtliche Leitungen parallel verlaufen und verschiedene Verbraucher einfach parallel an den Energiebus angeschlossen werden, das heißt die einzelnen Verbraucher teilen sich die Leitungen des Energiebusses. Jeder Verbraucher weist erfindungsgemäß eine Schalteinheit auf, welche die Energieversorgung des Verbrauchers nach Vorgabe der zentralen Steuereinheit aktiviert bzw. deaktiviert. Dazu sind vorteilhafterweise seitens der Steuereinheit vorgebbare und seitens der Schalteinheit umsetzbare Schaltbefehle über die Signalleitung übertragbar, bei komplexeren Schaltbefehlen vorteilhafterweise als digitale Signale, auch über mehrere zu einem Signalbus zusammengefaßte Signalleitungen.

Die Schaltbefehle sind dabei vorteilhafterweise über das Bedienelement der Steuereinheit eingebbar. Das Bedienelement kann dabei fester Bestandteil der Steuereinheit oder aber als drahtlose Fernbedienung ausgebildet sein. Ebenso ist es möglich, einen Rechner, beispielsweise einen PC, als Bedienelement einzusetzen.

Gemäß einer weiteren vorteilhaften Ausgestaltung der Erfindung sind seitens der Schalteinheit erfaßbare Verbraucherzustände über die Signalleitung der Steuereinheit meldbar. Mit diesen Zustandsrückmeldungen können seitens der zentralen Steuereinheit Fehlfunktionen, Übertragungsfehler, Störungen und dergleichen festgestellt werden, beispielsweise ob bestimmte Verbraucher nicht angeschlossen sind, ob keine Energie vorhanden ist, ob ein Kurzschluß vorliegt, aber auch verbraucherspezifische Daten wie beispielsweise Überströme, Temperaturen oder mechanische Rückmeldungen wie Drehzahlen, Schaltlagen und dergleichen. Vorteilhafterweise sind entsprechende Verbraucherzustände seitens der Steuereinheit anzeigbar, beispielsweise auf einem Monitor, einer digitalen Anzeige oder dergleichen.

Gemäß einer weiteren vorteilhaften Ausgestaltung der Erfindung ermöglicht die Schalteinheit ein kontinuierliches Einstellen der einem Verbraucher zur Verfügung stehenden Energie, vorzugsweise mittels Phasenanschnittssteuerung. Dazu weist die Schalteinheit einen Mehrschicht-Halbleiter zum schaltenden Verbinden des Verbrauchers mit den Energieversorgungsleitungen auf, vorzugsweise eine Zweirichtungs-Thyristortriode, auch Triac genannt. Mehrschicht-Halbleiter, meist unter dem Oberbegriff "Thyristoren" zusammengefaßt, sind elektronische Leistungsschalter, die in der Leistungselektronik und Antriebstechnik als elektronische Steller genutzt und dort als Ventile bezeichnet werden. Sie werden entsprechend ihrer Verwendung für kleine und große Ströme sowie für Spannungen bis zum kV-Bereich gefertigt. Mehrschicht-Halbleiter besitzen zwei Schaltzustände, den Schaltzustand EIN entsprechend leitend und den Schaltzustand AUS entsprechend gesperrt. Das Umschalten vom gesperrten in den leitenden Zustand wird als Zünden und das Umschalten vom leitenden in den gesperrten Zustand als Löschen bezeichnet. Sowohl der Zündvorgang als auch der Löschvorgang laufen dabei in sehr kurzer Zeit ab. Das sichere Zünden und Löschen der Mehrschicht-Halbleiter erfordert anwendungsbezogen häufig komplexere Zündgeneratoren, die unterschiedliche Zündimpulse liefern. Vorteilhafterweise weist die Schalteinheit einen Mikrocontroller zum Zünden und Löschen des Mehrschicht-Halbleiters auf, vorzugsweise einen Kleinstmikrocontroller, beispielsweise vom Typ PIC12C508.

In einer weiteren vorteilhaften Ausgestaltung der Erfindung ist die Schalteinheit in einem Verbraucher selbst oder in einem Netzanschluß eines Verbrauchers integriert. Dadurch ist die Möglichkeit gegeben, einen entsprechend ausgerüsteten Verbraucher problemlos, das heißt ohne aufwendige Verschaltungen, an den Energiebus anzuschließen. Ebenso ist die Möglichkeit gegeben, Verbraucher nachträglich mit der Schalteinheit auszurüsten.

Da die Schalteinheit im Gegensatz zu den elektrischen Verbrauchern mit einer geringeren Spannung betrieben werden kann, ist gemäß einer weiteren vorteilhaften Ausgestaltung der Erfindung die Signalleitung zur Energieversorgung der Schalteinheit einsetzbar, so daß beispielsweise die Versorgungsspannung für die Schalteinheit neben den Schaltbefehlen und Zustandsrückmeldungen über die Signalleitung bereitgestellt wird.

Weitere Einzelheiten, Merkmale und Vorteile der vorliegenden Erfindung ergeben sich aus der nachfolgenden Beschreibung der zugehörigen Zeichnungen, in denen ein bevorzugtes Ausführungsbeispiel der Erfindung schematisch dargestellt ist. Dabei zeigen:
- FIG 1: den prinzipiellen Aufbau eines Steuersystems nach der Erfindung und
- FIG 2: ein Schaltbild eines Ausführungsbeispiels einer Schalteinheit gemäß der Erfindung.

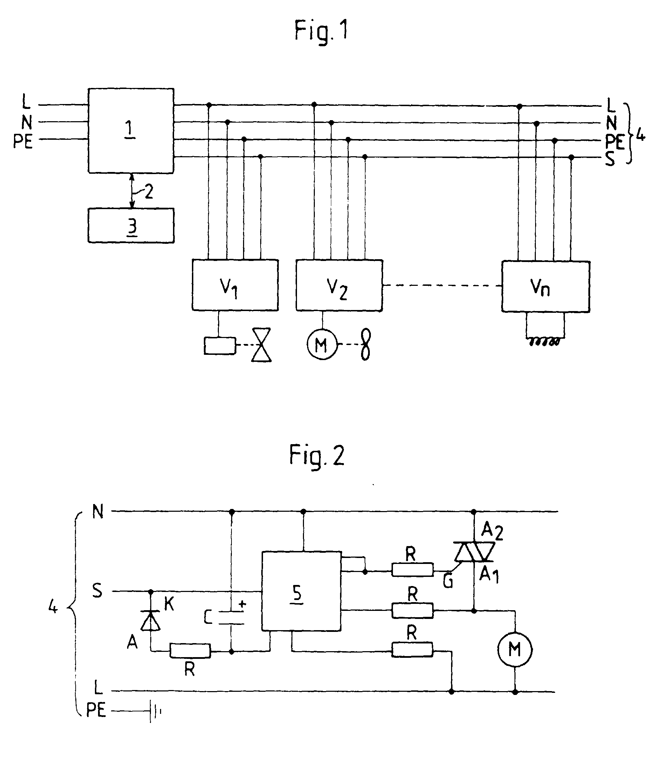

Das in FIG 1 dargestellte Steuersystem zum zentralen Schalten von elektrischen Verbrauchern besteht aus einer zentralen Steuereinheit 1, welche über die mit 2 gekennzeichnete Verbindung mit einem Bedienelement 3 verbunden ist. Die Steuereinheit 1 ist dabei über das Bedienelement 3 auch programmierbar. Desweiteren weist das Steuersystem einen aus Energieversorgungsleitungen L, N, PE eines Energieversorgungsnetzes und einer Signalleitung S gebildeten Energiebus 4 auf, der zentral mit der Steuereinheit 1 verbunden ist. An den Energiebus 4 sind parallel mehrere verschiedene Verbraucher V₁ bis Vₙ angeschlossen, die unterschiedliche elektrische Komponenten umfassen, Verbraucher V₁ ein Magnetventil, Verbraucher V₂ eine Pumpe und Verbraucher Vₙ eine Heizung.

Seitens der Steuereinheit 1 vorgebbare und seitens der in FIG 1 nicht explizit dargestellten Schalteinheit umsetzbare Schaltbefehle sind über die Signalleitung S übertragbar. Ebenso sind seitens der Schalteinheit erfaßbare Verbraucherzustände über die Signalleitung S der Steuereinheit 1 meldbar und seitens der Steuereinheit 1 oder des Bedienelementes 3 anzeigbar.

FIG 2 zeigt ein Schaltbild einer Schalteinheit. Hier ist der Motor M eines Verbrauchers V auf der einen Seite mit der Energieversorgungsleitung L und an der anderen Seite mit der Anode A₁ einer Zweirichtungs-Thyristortriode verbunden, deren Anode A₂ mit der Energieversorgungsleitung N verbunden ist. Der Gateanschluß G der Zweirichtungs-Thyristortriode ist über einen Widerstand R mit einem Mikrocontroller 5 verbunden, welcher in Abhängigkeit der über die Signalleitung S übertragenen, seitens der Steuereinheit vorgegebenen Schaltbefehle entsprechende Impulse zum Zünden oder Löschen der Zweirichtungs-Thyristortriode erzeugt und auf den Gateanschluß G der Zweirichtungs-Thyristortriode gibt. Der Motor M ist so in Abhängigkeit von Schaltbefehlen seitens der Steuereinheit über die Zweirichtungs-Thristortriode an die Energieversorgungsleitung L und N anschließbar.

Wie in FIG 2 dargestellt, ist der Mikrocontroller 5 über einen Widerstand R mit dem seitens der Anode A₁ liegenden Anschluß des Motors M, über einen weiteren Widerstand R mit der Energieversorgungsleitung L, über einen weiteren in Reihe mit einer Diode geschalteten Widerstand R mit der Signalleitung S, über eine Verbindung direkt mit der Energieversorgungsleitung N und über eine weitere Verbindung mit der zum Gate der Zweirichtungs-Thyristortriode führenden Leitung verbunden. Diese Verbindungen dienen zur Erfassung von Verbraucherzuständen, welche über die Signalleitung S des Energiebusses 4 der Steuereinheit 1 meldbar sind. Der Kondensator C zwischen einer von dem Mikrocontroller 5 ausgehenden Verbindung und der Energieversorgungsleitung N dient zur Gleichspannungsentkopplung. Der Mikrocontroller 5 ist über die Signalleitung S gleichzeitig mit einer Versorgungsspannung, hier einer Gleichspannung von etwa 5 V versorgbar.

## Patentansprüche

1. Steuersystem zum zentralen Schalten von elektrischen Verbrauchern, insbesondere Haushaltsgeräten, bestehend aus einer zentralen Steuereinheit (1) mit einem Bedienelement (3), einem mit der Steuereinheit (1) verbundenen Energiebus (4), umfassend Energieversorgungsleitungen (L,N,PE) eines Energieversorgungsnetzes und wenigstens eine Signalleitung (S), und wenigstens einer Schalteinheit zum Anschluß eines Verbrauchers (V,V₁ - Vₙ) an den Energiebus (4), weiche seitens des Verbrauchers (V,V₁ - Vₙ) angeordnet ist.

2. Steuersystem nach Anspruch 1, **dadurch gekennzeichnet,** daß seitens der Steuereinheit (1) vorgebbare und seitens der Schalteinheit umsetzbare Schaltbefehle über die Signalleitung (S) übertragbar sind.

3. Steuersystem nach Anspruch 1 oder 2, **dadurch gekennzeichnet,** daß Schaltbefehle über das Bedienelement (3) eingebbar sind.

4. Steuersystem nach einem oder mehreren der Ansprüche 1 bis 3, **dadurch gekennzeichnet,** daß seitens der Schalteinheit erfaßbare Verbraucherzustände über die Signalleitung (S) der Steuereinheit (1) meldbar sind.

5. Steuersystem nach einem oder mehreren der Ansprüche 1 bis 4, **dadurch gekennzeichnet,** daß Verbraucherzustände seitens der Steuereinheit (1) anzeigbar sind.

6. Steuersystem nach einem oder mehreren der Ansprüche 1 bis 5, **dadurch gekennzeichnet,** daß die Schalteinheit ein kontinuierliches Einstellen der einem Verbraucher (V, V₁ - Vₙ) zur Verfügung stehenden Energie ermöglicht, vorzugsweise mittels Phasenanschnittssteuerung.

7. Steuersystem nach einem oder mehreren der Ansprüche 1 bis 6, **dadurch gekennzeichnet,** daß die Schalteinheit einen Mehrschicht-Halbleiter zum schaltenden Verbinden des Verbrauchers (V,V₁ - Vₙ) mit den Energieversorgungsleitungen (L,N,PE) aufweist, vorzugsweise eine Zweirichtungs-Thyristortriode.

8. Steuersystem nach Anspruch 7, **dadurch ge-kennzeichnet,** daß die Schalteinheit einen Mikrocontroller (5) zum Zünden und Löschen des Mehrschicht-Halbleiters aufweist.

9. Steuersystem nach einem oder mehreren der Ansprüche 1 bis 8, **dadurch gekennzeichnet,** daß die Schalteinheit in einen Verbraucher (V,V₁ - Vₙ) integrierbar ist.

10. Steuersystem nach einem oder mehreren der Ansprüche 1 bis 9, **dadurch gekennzeichnet,** daß die Steuereinheit in einen Netzanschluß eines Verbrauchers (V,V₁ - Vₙ) integriert ist.

11. Steuersystem nach einem oder mehreren der Ansprüche 1 bis 10, **dadurch gekennzeichnet,** daß die Signalleitungen (S) zur Energieversorgung der Schalteinheit einsetzbar ist.
